# EUROPEAN PATENT APPLICATION

(11) **EP 4 715 662 A1**
(43) Date of publication of application: **25.03.2026**
(21) Application number: 25199712.8
(22) Date of filing: 02.09.2025
(51) Int. Cl.: G06F 40/186, G06F 16/3329, G06F 40/35, G06N 3/02, G06Q 10/10, G06Q 40/08

(54) **SYSTEMS AND METHODS FOR USING GENERATIVE ARTIFICIAL INTELLIGENCE FOR DOCUMENT GENERATION**

(30) Priority: 13.09.2024 US 202463694395 P; 04.10.2024 US 202418906433
(71) Applicant: Palantir Technologies Inc., Denver, CO 80202 (US)
(72) Inventor: WESTPHAL, Daniel, New York (US); CALLAHAN, Jack Miles, New York (US); DAVID, Jeremy, Brooklyn (US); PILLAI, Pranav, Narbeth (US); MARTINEAU, Sherwood, New York (US); BIKMAL, Anish, Cumming (US); JUNGCK, Jonathan, New York (US); GHEISSARI, Pargol, New York (US); JARA SABA, Gonzalo, New York (US); BISSELL, Mark, New York (US)
(74) Representative: Sayer, Robert David

(57) **Abstract**

In some examples, systems and methods for document writing and/or document generation are provided. For example, a method includes: identifying one or more document types associated with a request, each document type being associated with a document template; extracting one or more pieces of evidence from one or more data records based on the request; accessing one or more routes for document generations, each route of the one or more routes using one or more template-specific computing models; generating one or more documents using the one or more routes; and outputting a selected document that is selected from the one or more generated documents.

## Description

This application claims priority U.S. Provisional Application No. 63/694,395, filed September 13, 2024, which is incorporated in its entirety by reference herein for all purposes.

### FIELD

Certain embodiments of the present disclosure relate to document generation (e.g., document writing). More particularly, some embodiments of the present disclosure relate to document generation using generative artificial intelligence (AI).

### BACKGROUND

Numerous documents are generated based on certain requirements every day. In some embodiments, documents are generated with some specific purposes. For example, documents are generated to appeal insurance decisions. As an example, documents are legal documents. In certain embodiments, documents are generated based on a number of facts and/or pieces of evidence.

Hence, it is desirable to improve techniques for document writing and/or document generation.

### SUMMARY

Certain embodiments of the present disclosure relate to document generation (e.g., document writing). More particularly, some embodiments of the present disclosure relate to document generation using generative artificial intelligence (AI).

At least some embodiments are directed to a method for document generation. In certain embodiments, the method includes: identifying one or more document types associated with a request, each document type being associated with a document template; extracting one or more pieces of evidence from one or more data records based on the request; accessing one or more routes for document generations, each route of the one or more routes using one or more template-specific computing models; generating one or more documents using the one or more routes; and outputting a selected document that is selected from the one or more generated documents; wherein the method is performed by one or more processors.

At least some embodiments are directed to a system for document generation, the system comprising: one or more memories comprising instructions stored thereon; and one or more processors configured to execute the instructions and perform operations comprising: identifying one or more document types associated with a request, each document type being associated with a document template; extracting one or more pieces of evidence from one or more data records based on the request; accessing one or more routes for document generations, each route of the one or more routes using one or more template-specific computing models; generating one or more documents using the one or more routes; and outputting a selected document that is selected from the one or more generated documents.

At least some embodiments are directed to a method for generating an appeal letter. In certain embodiments, the method includes: receiving a denial letter; determining one or more document types to be generated based on information in the denial letter; generating one or more document templates based on the one or more determined document types; determining one or more types of evidence based on the information in the denial letter; extracting one or more pieces of evidence from one or more data sources using a first computing model, each piece of evidence corresponding to one of the one or more types of evidence; and generating one or more documents based on the one or more pieces of evidence and the one or more document templates using one or more second computing models; generating the appeal letter based on the one or more generated documents; wherein the method is performed by one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is a simplified diagram showing a software architecture for document generation according to certain embodiments of the present disclosure.
Figure 2 is a simplified diagram showing a method for document generation according to certain embodiments of the present disclosure.
Figure 3 is an illustrative document generation environment according to certain embodiments of the present disclosure.
Figure 4 is an illustrative workflow having multiple routes for a document generation system according to certain embodiments of the present disclosure.
Figures 5A and 5B are illustrative diagrams showing documents with document sections according to certain embodiments of the present disclosure.
Figure 6 is a simplified diagram showing a computing system for implementing a system for document generation in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods often lack tools to generate documents efficiently. In some examples, documents are often generated manually. For example, hospital personnel often need to write appeal letters for insurance denials. Additionally, conventional systems and methods often lack a way to extract relevant data from one or more data sources efficiently for writing documents.

Various embodiments of the present disclosure can achieve benefits and/or improvements by using a document generation system, for example, to generate first drafts of documents for human review and editing. In some embodiments, the document generation system uses one or more first computing models to extract relevant data, such as one or more relevant facts, one or more relevant pieces of evidence, which is to be incorporated into one or more documents. In certain embodiments, the document generation system is configured to generate the one or more documents using one or more second computing models, where a second computing model is different from a first computing model. In some embodiments, the document generation system can greatly improve efficiency in generating documents, including generating documents using relevant data. In certain embodiments, the document generation system can greatly improve efficiency in generating an appeal letter in response to a denial letter, including generating the appeal letter using relevant pieces of evidence.

According to some embodiments, organizations need to generate (e.g., write) a lot of documentation. For example, hospitals have to write a lot of documents for payors. As an example, hospitals have to write documents to prove that they should be paid by the insurance company for the treatment provided. In some embodiments, writing documents is often a laborious process. As an example, when the number of denied insurance claims increases and it becomes increasingly more difficult to find resources to generate documents to appeal the denials, such document generation (e.g., writing) has become a high value and pressing issue for hospitals. Furthermore, in some embodiments, the current process of document generation (e.g., writing document) is typically not standardized for an organization (e.g., within a hospital). In certain embodiments, there is a need for at least some level of standardized process (e.g., determinism, logic, etc.) for document generation. In some embodiments, the need for a solution in this space that leverages large language models to abstract out tedious, manual work is apparent.

According to certain embodiments, a document generation system uses one or more functions to deterministically decide what type of template each document falls under. In some embodiments, the document generation system is configured to automatically route each document type (e.g., each appeal letter) to the corresponding logic file for that template. In certain embodiments, the document generation system uses one or more logics (e.g., processing logics) to query a data repository (e.g., a patient's chart with the appropriate permissions to do so) and generate facts and/or evidence objects. In some embodiments, the document generation system uses one or more logics to generate the document (e.g., write the appeal letter), query related evidence and the data repository (e.g., patient's charts) in a RAG (retrieval-augmented generation) type workflow. In certain embodiments, a fact is referred to as a piece of evidence.

According to some embodiments, the document generation system uses one or more user interfaces (e.g., workshops) for user interaction with software platforms. In certain embodiments, the document generation system includes an AI system based on LLMs tailored to one or more specific types of document generation. For example, the LLM is tailored to hospitals to generate medical documentation for appeals letters in order to increase efficiency and worker capacity. In some embodiments, the document generation system includes the curation of evidence, and writing prompts based on querying aspects of the data repository (e.g., the patient charts) as well as evidence.

According to certain embodiments, the document generation system can connect with one or more data sources (e.g., the hospital system(s) with the appropriate legal authority and permissions to do so) and set up a live ingestion of data for the current work queue of document generation (e.g., writing appeals, etc.). In some embodiments, the document generation system may interface with other data feeds for related data (e.g., clinical information). In certain embodiments, upon ingestion of a new entry into the work queue, the document generation system can trigger the creation of a new document (e.g., an appeal letter, etc.). In some embodiments, the creation of the new document (e.g., the appeal letter, etc.) triggers a function to read any associated data (e.g., clinical information) to determine one or more types of documents to be written.

According to some embodiments, relevant data (e.g., clinical information about the patient) is fed into a large language model, which extracts out evidence from the relevant data and saves it to one or more evidence objects. In certain embodiments, the prompt for what evidence to search for in the one or more data sources may depend on the type of document or factors (e.g., clinical factors relating to a patient, etc.). In some embodiments, the document generation system feeds the evidence (e.g., extracted from the patient chart) into a template specific large language model to write a document (e.g., letter, report, etc.) in a specified format.

In certain embodiments, the document generation system uses deterministic logic to add one or more standardized introductions, headers, document structures, template languages, variable values, and/or the like. In some embodiments, the document generation system tracks the results of generated documents, for example, successful documents (e.g., successful appeal letter, etc.) and/or unsuccessful documents (e.g., unsuccessful appeal letter, etc.). In certain embodiments, successful letters are fed into an LLM that extracts out key features and add the features to one or more evidence objects. In some embodiments, the one or more evidence objects are then fed back into the LLMs to adjust and/or improve the LLM, for example, via prompt engineering.

In some embodiments, the document generation system uses one or more LLMs to draft the documents, which can greatly save computing resources, (e.g., resulting in up to five (5) times of time savings). For example, with the time saving, the system allows hospitals to appropriately manage increased numbers of denials as well as difficulties scaling staff. In some examples, the system can deterministically choose what templates to write, such that increases standardization (e.g., standardization across the board) and reduces chance of human error (e.g., unsuccessful letter, etc.).

According to certain embodiments, the document generation system (e.g., a software module, a software system) can include and/or access one or more computing models (e.g., one or more artificial intelligence (AI) models), also referred to as document generation models, for generating and/or modifying one or more documents. In some embodiments, a model, also referred to as a computing model, includes a model to process data. A model includes, for example, an artificial intelligence (AI) model, a machine learning (ML) model, a deep learning (DL) model, an image processing model, an algorithm, a rule, other computing models, and/or a combination thereof. In certain embodiments, a document generation AI model can generate and/or modify one or more documents (e.g., letters, appeal letters).

In certain examples, a document generation AI model can include training data (e.g., a part of training corpus) embedded in the model. In some embodiments, the document generation AI model includes a generative AI (artificial intelligence) model with training data embedded in the model. In certain embodiments, a generative AI model is a type of AI model that can be used to produce various type of content, such as text, images, videos, audio, 3D (three-dimensional) data, 3D models, and/or the like. In some embodiments, a language model or a large language model (LLM), which is a type of generative AI models, includes content and training data embedded in the model.

According to some embodiments, the document generation AI model (e.g., a language model, an LLM, etc.) can be trained using selected corpus (e.g., historical inputs, historical denials, historical templates, historical requirements, historical document types, historical evidence objects, historical facts, historical prompt structures, historical prompts, historical functions, historical document results, historical feedbacks, etc.). In certain embodiments, the document generation AI model is configured to generate one or more documents based on one or more inputs (e.g., prompts). In some embodiments, the document generation AI model includes one or more template specific LLMs. In some embodiments, a template refers to a document template for a document type. In certain embodiments, a template specific LLM refers to a large language model that includes specific parameters and/or prompts for the document type. In some examples, a prompt for a template specific LLM can include one or more template specific variables.

According to certain embodiments, the document generation AI model includes a plurality of computing models coupled in series and/or in parallel. In some embodiments, the document generation AI model includes one or more LLM configured to extract one or more pieces of evidence from one or more data records (e.g., patient charts, etc.) of one or more data sources (e.g., healthcare systems, etc.). In certain embodiments, the document generation AI model includes a first LLM to generate one or more evidence objects and/or generate one or more prompts and a second LLM coupled to the first LLM in series, such that the second LLM receives the one or more prompts and the one or more evidence objects and generates one or more documents. In some embodiments, the document generation AI model includes a second LLM configured to generate a first document type and a third LLM coupled to the second LLM in parallel, where the third LLM is configured to generate a second document type. In certain embodiments, the second LLM and/or the third LLM are coupled to the first LLM configured to generate one or more evidence objects and/or one or more prompts in series.

In some embodiments, the document generation AI model includes a language model ("LM") that may include an algorithm, rule, model, and/or other programmatic instructions that can predict the probability of a sequence of words or expressions (e.g., textual queries, summary, text strings, software code). In some embodiments, a language model may, given a starting text string (e.g., one or more words), predict the next word or expression in the sequence. In certain embodiments, a language model may calculate the probability of different word combinations and/or software code based on the patterns learned during training (based on a set of text data from books, articles, websites, audio files, software code, etc.).

In some embodiments, a language model may generate many combinations of one or more next words and/or expressions that are coherent and contextually relevant. In certain embodiments, a language model can be an artificial intelligence model that has been trained to understand, generate, and manipulate language (e.g., computing language expressions). In some embodiments, a language model can be useful for natural language processing, including receiving natural language prompts and providing natural language responses based on the text on which the model is trained. In certain embodiments, a language model may include an n-gram, exponential, positional, neural network, and/or other type of model. In some embodiments, a language model can be used to generate software code.

In certain embodiments, the document generation AI model includes a large language model (LLM), which was trained on a larger data set and has a larger number of parameters (e.g., billions of parameters, trillions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pretrained Transformer 3 (GPT-3) model, a GPT 3.5-turbo model, a GPT-4 model, a Claude model, a command-xlang model, a bidirectional encoder representations from transformers (BERT) model, a pathways language model (PaLM) 2, and/or the like.

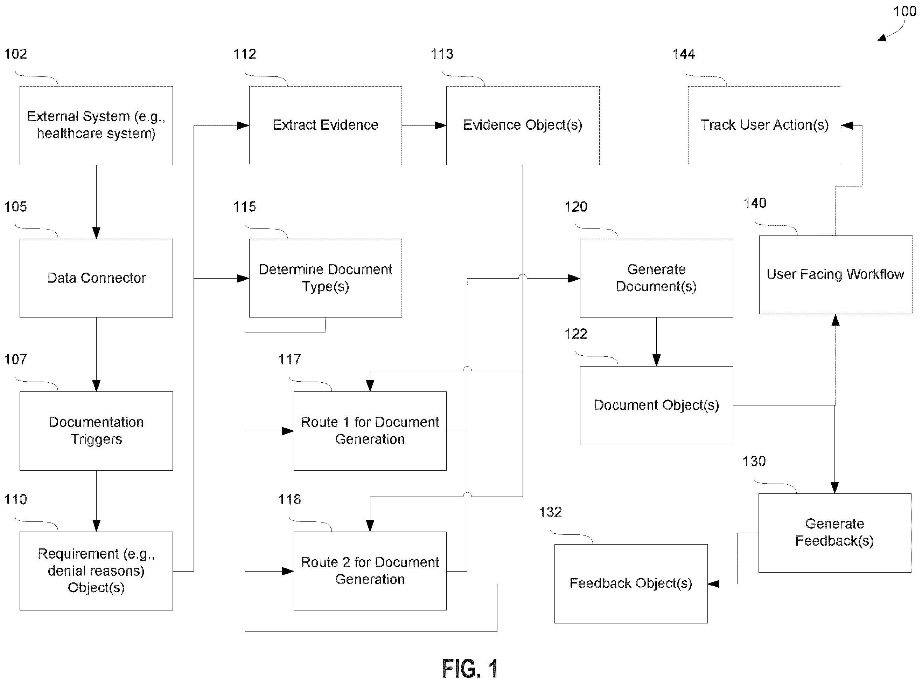

Figure 1 is a simplified diagram showing a software architecture 100 for document generation according to certain embodiments of the present disclosure. This diagram is merely an example. One of ordinary skill in the art would recognize many variations, alternatives, and modifications. The software architecture 100 includes components and processes 102, 105, 107, 110, 112, 113, 115, 117, 118, 120, 122, 130, 132, 140, and 144. Although the above has been shown using a selected group of components and processes for the software architecture 100 for document generation, there can be many alternatives, modifications, and variations. For example, some of the processes may be expanded and/or combined. Other components and processes may be inserted to those noted above. Depending upon the embodiment, the sequence of processes may be changed, and one or more components and processes may be replaced. Further details of these components and processes are found throughout the present disclosure.

According to certain embodiments, an external system 102 (e.g., a healthcare system) manages a request system (e.g., an appeal system). In some embodiments, a document generation system (e.g., a software service, a software module) includes a data connector 105 (e.g., software interface, software services) that connects to the external system and listens. For example, the document generation system detects receiving a denial letter for an insurance claim. In certain embodiments, at process 107, the document generation system generates documentation triggers. In some examples, the system can use the requirement data (e.g., denial letters) to feed into a data repository, for example, a data repository includes datasets (e.g., data tables, data records, etc.) indicating what documents to be written (e.g., triggers the document generation).

According to some embodiments, the document generation system generates one or more requirements (e.g., denial reasons) objects 110. For example, the addition of new rows in process 107 triggers the creation of document templates (e.g., empty document objects, empty documents, etc.). In certain embodiments, at process 112, the document generation system extracts one or more pieces of evidence, also referred to as facts, from one or more data sources (e.g., the external system 102, one or more patient records, patient's chart, etc.). In some embodiments, the one or more pieces of evidence are generated based on one or more requirements, but not the document type. In some embodiments, the document generation system extracts one or more pieces of evidence using one or more large language models. In certain embodiments, the document generation system determines one or more requirements (e.g., denial reasons) from the request received. In some examples, the document generation system determines one or more denial reasons from a denial letter received. For example, the requirement or denial reason indicates requesting patient age information, patient passed medical history, additional patient encounter information (e.g., blood pressure), and/or the like. In some embodiments, the document generation system determines the one or more requirements using a first computing model (e.g., a natural language understanding model, a language model, a large language model).

In certain embodiments, the document generation system determines one or more types of evidence based on the one or more requirements (e.g., one or more denial reasons). For example, the denial reason is hospital stay duration is missing, and the type of evidence is hospital stay duration. In some embodiments, the document generation system extracts one or more pieces of evidence based at least in part on the one or more types of evidence and/or the one or more requirements (e.g., one or more denial reasons). In certain embodiments, the document generation system prepares an evidence prompt based on based at least in part on the one or more types of evidence and/or the one or more requirements (e.g., one or more denial reasons). In some embodiments, the document generation system prepares an evidence prompt using a prompt structure based at least in part on the one or more types of evidence and/or the one or more requirements (e.g., one or more denial reasons). In certain embodiments, the document generation system uses a second computing model (e.g., an LLM) to extract one or more pieces of evidence from one or more data sources (e.g., datasets, data tables, patient records, etc.). In some embodiments, the second computing model is different from the first computing model. In certain embodiments, the system generates one or more evidence objects 113 based on the one or more pieces of evidence.

According to some embodiments, at process 115, the document generation system determines one or more document types based on the one or more requirement(s) and/or the one or more requirement objects. For example, the denial letter of the insurance claim includes only one reason for denial, and the system determines only one type of document that needs to be created. As an example, the denial letter of the insurance claim includes multiple reasons for denial, and the system determines multiple types of documents that need to be created. In some examples, given the same reason for denial, the system can determine different document types to be created based on at least additional information (e.g., types of insurance policies etc.). In some examples, the system determines one document type for each requirement of the one or more requirements. In certain examples, the system determines multiple document types for one requirement. In certain examples, the system determines multiple document types for one requirement based on additional data associated with the one requirement.

According to some embodiments, the document generation system provides document type and one or more pieces of evidence and/or one or more evidence objects 113 to one or more routes (e.g., route 117, route 118) for document generation. In certain embodiments, route 117 and route 118 receive a same set of evidence or evidence objects 113. In some embodiments, route 117 uses a first subset of the set of evidence 113 and route 118 uses a second subset of the set of evidence 113. In certain embodiments, the first subset of the set of evidence 113 is different from the second subset of the set of evidence 113. In some examples, the first subset of the set of evidence 113 includes a first evidence and the second subset of the set of evidence 113 does not include the first evidence. For example, a first route uses the evidence of a patient's blood pressure, and a second route does not use the evidence of the patient's blood pressure.

According to certain embodiments, route 117 uses a first template-specific LLM and route 118 uses a second template-specific LLM. In some embodiments, a template-specific LLM refers to an LLM associating with a template-specific prompt and/or an LLM trained for a specific document template. In certain embodiments, the system generates a first prompt for the first template-specific LLM and a second prompt for the second template-specific LLM. In some embodiments, route 117 and/or route 118 includes a function, for example, a function to determine a value. In certain embodiments, the system uses a function (e.g., a template) to generate a prompt, for example, incorporating one or more pieces of evidence (e.g., a patient's physiology data, a patient's past medical history, etc.) into a prompt. In some embodiments, route 117 and/or route 118 includes a function and an LLM. In certain embodiments, route 117 and/or route 118 includes two or more chained LLMs, where a first LLM provides input to a second LLM of the two or more chained LLM. In some embodiments, a prompt includes a variable to be filled according to one or more pieces of evidence.

According to some embodiments, at process 120, the system generates one or more documents using one or more routes. For example, the route 117 generates a first document, and the route 118 generates a second document that is different from the first document. In certain embodiments, the system generates one or more document objects 122 based on the generated documents.

According to certain embodiments, at process 130, the system generates one or more feedback, generates one or more feedback objects, and saves the one or more feedback into one or more feedback objects. In some embodiments, the system receives document results (e.g., whether an appeal letter is approved, whether an appeal letter is denied) and extracts the feedback from document results. In certain embodiments, the feedback what is good and/or bad about the document. In some embodiments, the system provides the one or more feedback and/or one or more feedback objects to the one or more routes (e.g., route 117, route 118). In certain embodiments, the system updates a prompt used in a route based on at least one feedback of the one or more feedback. In some embodiments, the system updates a function used in a route based on at least one feedback of the one or more feedback. In certain embodiments, the system updates an LLM used in a route based on at least one feedback of the one or more feedback.

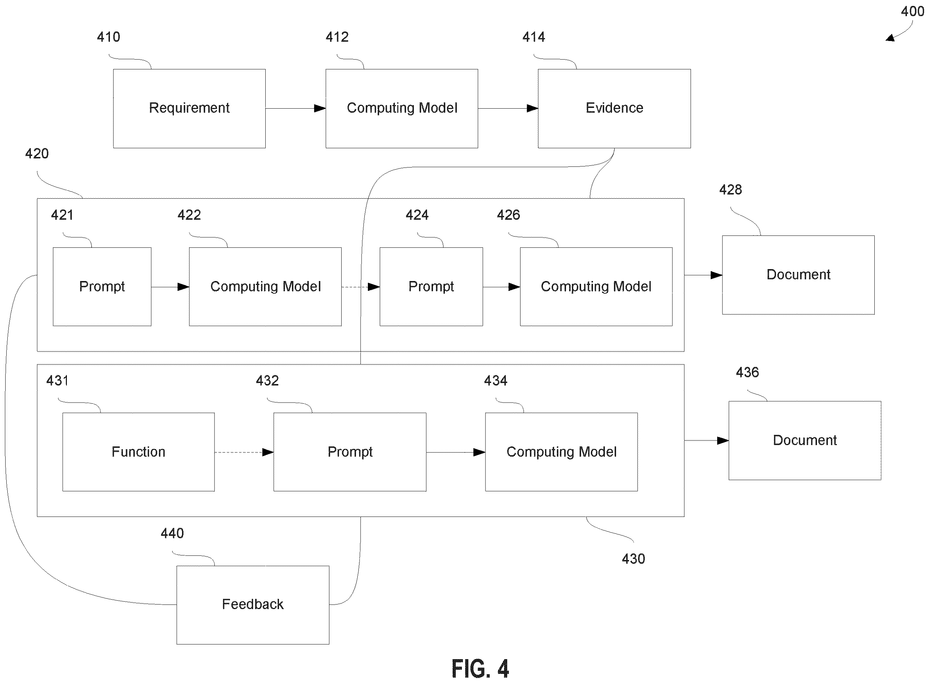

Figure 4 is an illustrative workflow 400 having multiple routes for a document generation system according to certain embodiments of the present disclosure. Figure 4 is merely an example. One of ordinary skill in the art would recognize many variations, alternatives, and modifications. In this example, the workflow 400 includes a plurality of computing models, such as a first computing model 412, a second computing model 422, a third computing model 426, and a fourth computing model 434. In some embodiments, the computing models are document generation AI model. In some embodiments, the first computing model 412 is different from the second computing model 422. In certain embodiments, one or more of the computing models 412, 422, 426, and 434 include a language model and/or a large language model. In some examples, the first computing model 412 is designed and/or trained to determine extract one or more pieces of evidence 414 based on one or more requirements 410 (e.g., denial reasons). In certain examples, the second computing model 422, the third computing model 426, and/or the fourth computing model 434 are designed and/or trained to generate documents and/or document sections.

According to certain embodiments, the workflow 400 includes a first route 420 and a second route 430. In some embodiments, the first route 420 is configured to generate a first document type for a first document 428 and the second route 430 is configured to generate a second document type for a second document 436. In certain embodiments, the pieces of evidence 414 are provided as input to the first route 420 and the second route 430. In some embodiments, the first route 420 and/or the second route 430 uses the pieces of evidence 414 to generate one or more prompts (e.g., a first prompt 421, a second prompt 424, a third prompt 432). In certain embodiments, the first route 420 and/or the second route 430 uses the pieces of evidence 414 in a function 431. In some embodiments, the first route 420 uses a first subset of the pieces of evidence 414 and the second route 430 uses a second subset of the pieces of evidence 414. In certain embodiments, the first subset and/or the second subset is the entire set of the pieces of evidence 414. In some embodiments, the first subset and/or the second subset does not include every piece of evidence in the full set of evidence 414. In certain embodiments, the first subset is different from the second subset. In some embodiments, the first subset includes a piece of evidence that is not in the second subset of evidence. In certain embodiments, the second subset includes a piece of evidence that is not in the first subset.

In certain embodiments, the first route 420 includes generating a first prompt 421 to feed into the second computing model 422 to generate an output. In some embodiments, the output is a document section. In certain embodiments, the output is a text stream. In some embodiments, the output is an input to the generate a second prompt 424. In certain embodiments, the first route 420 includes inputting the second prompt 424 to the third computing model 426 to generate the document 428 and/or a document section of the first document 428. In some embodiments, the first prompt 421 is used to generate a first document section of the document 428 and the second prompt 424 is used to generate a second document section of the document 428. In certain embodiments, the first prompt 421 is generated using a first subset of the pieces of evidence 414, and the second prompt 424 is generated using a second subset of the pieces of evidence 414. In certain embodiments, the first subset and/or the second subset is the entire set of the pieces of evidence 414. In some embodiments, the first subset and/or the second subset does not include every piece of evidence in the full set of evidence 414. In certain embodiments, the first subset is different from the second subset. In some embodiments, the first subset includes a first piece of evidence that is not in the second subset of evidence. In certain embodiments, the second subset includes a piece of evidence that is not in the first subset.

According to certain embodiments, the second computing model 422 and the third computing model 426 is coupled in series. In some embodiments, the output of the second computing model 422 is the input to the third computing model 426. In certain embodiments, the second computing model 422 and the third computing model 426 is coupled in parallel. In certain embodiments, the second computing model 422 generates a first document section and the third computing model 426 generates a second document section of the first document 428.

According to some embodiments, the second route 430 includes the function 431 to generate an output. In certain embodiments, the output of the function 431 includes a value. In some embodiments, the output of the function 431 includes a text stream. In certain embodiments, the output of the function 431 includes a document section. In some embodiments, the output of the function 431 is used to generate the third prompt 432. In certain embodiments, the second route 430 includes inputting the third prompt 432 to the fourth computing model 434 to generate the document 436 and/or a document section of the document 436. In some embodiments, the function 431 and the fourth computing model 434 are coupled in series. For example, the function 431 generates an output as an input to the fourth computing model 434. In certain embodiments, the function 431 uses a first subset of the pieces of evidence 414, and the third prompt 432 is generated using a second subset of the pieces of evidence 414. In certain embodiments, the first subset and/or the second subset is the entire set of the pieces of evidence 414. In some embodiments, the first subset and/or the second subset does not include every piece of evidence in the full set of evidence 414. In certain embodiments, the first subset is different from the second subset. In some embodiments, the first subset includes a first piece of evidence that is not in the second subset of evidence.

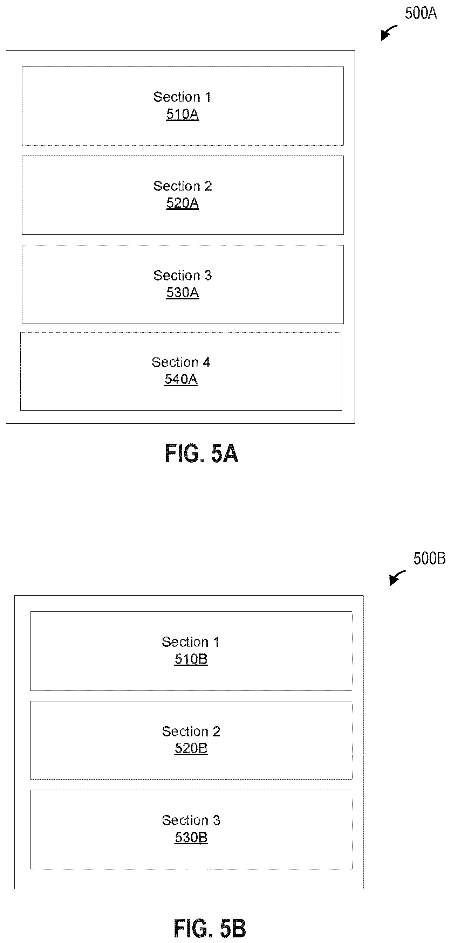

Figures 5A and 5B are illustrative diagrams showing documents with document sections according to certain embodiments of the present disclosure. Figures 5A and 5B are merely an example. One of ordinary skill in the art would recognize many variations, alternatives, and modifications. For example, the document 500A (e.g., the document 428) includes a first section 510A, a second section 520A, a third section 530A, and a fourth section 540A. As an example, the document 500B (e.g., the document 436) includes a first section 510B, a second section 520B, and a third section 530B. In some embodiments, the one or more sections of two documents are the same. For example, the section 530A of the document 500A is the same as the section 520B of the document 500B.

While the example in Figure 4 includes two routes with specific configurations, the document generation system can include three or more routes and each route can include one or more functions and/or one or more computing models. In certain embodiments, the first route 420 uses a same computing model as the second route 430. For example, the third computing model 426 in the first route 420 is the same as the fourth computing model 434 in the second route 430.

According to certain embodiments, the workflow 400 includes using one or more feedback 440 to update the first route 420 and/or the second route 430. In some embodiments, the workflow 400 includes using at least one of the one or more feedback to update one or more prompts (e.g., the first prompt 421, the second prompt 424, the third prompt 432, etc.). In certain embodiments, the workflow 400 includes using at least one of the one or more feedback to update one or more functions (e.g., the function 431). In some embodiments, the workflow 400 includes using at least one of the one or more feedback to update one or more computing models (e.g., the computing models 412, 422, 426, and/or 434).

According to some embodiments, referring back to Figure 1, the system includes a user facing workflow 140 to receive and/or generate feedback. For example, the feedback indicates avoidance of certain terms. In some examples, the feedback indicates additional data required and the system updates a prompt including the additional data. In certain embodiments, at process 144, the system tracks user actions (e.g., edits, submissions, etc.). In some embodiments, the system stores the use actions in the document object 122.

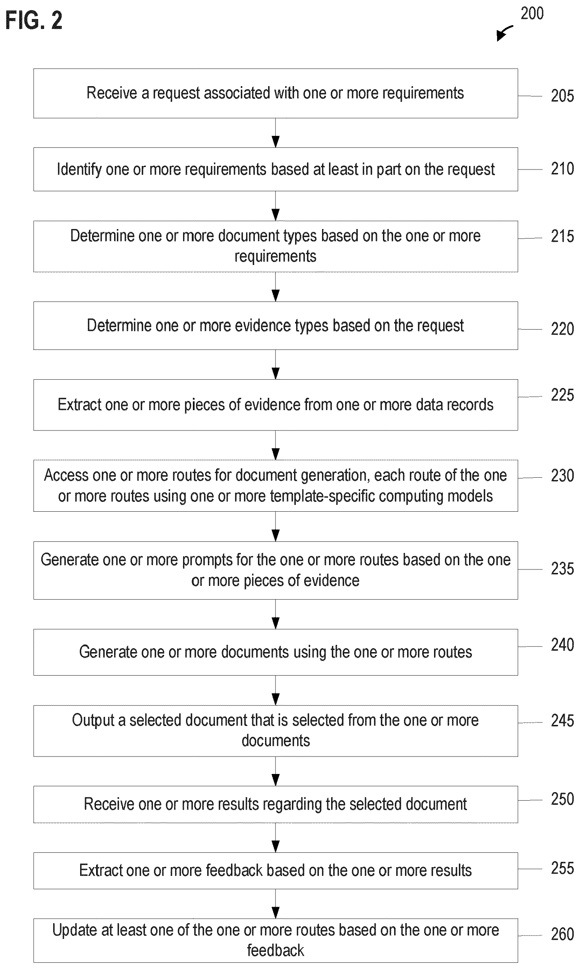

Figure 2 is a simplified diagram showing a method 200 for document generation according to certain embodiments of the present disclosure. This diagram is merely an example. One of ordinary skill in the art would recognize many variations, alternatives, and modifications. The method 200 includes processes 205, 210, 215, 220, 225, 230, 235, 240, 245, 250, 255, and 260. Although the above has been shown using a selected group of processes for the method 200, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 200 are performed by a system (e.g., the computing system 600). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at process 205, the system receives a request associated with one or more requirements. In some examples, the request is a denial letter of an insurance claim. In certain examples, the request is to generate a legal brief. In some embodiments, at process 210, the system identifies one or more requirements based at least in part on the request. In certain embodiments, the system identifies one or more denial reasons based at least in part on the denial letter. In some embodiments, the system is configured to identify the one or more requirements based on the request and one or more data records associated with the request. In certain embodiments, the one or more data records are stored in one or more data repositories. In some embodiments, the one or more data records are stored in a plurality of data repositories (e.g., a plurality of servers, etc.). In certain embodiments, the one or more data records are stored in a plurality of data systems (e.g., a plurality of healthcare systems). In some embodiments, the system is configured to identify the one or more denial reasons based on the denial letter and one or more patient records for which permission to access such patient records is granted by the appropriate entity (e.g., better security).

According to some embodiments, at process 215, the system determines one or more document types based on the one or more requirements. In certain embodiments, a document type is determined based on at least one of the one or more requirements. In some embodiments, the system determines two or more different document types based on the one or more requirements. In certain embodiments, a document type corresponds to a document template. For example, a document type is an appeal letter for a treatment. As an example, the document type corresponds to a document template that includes one or more document sections (e.g., paragraphs) to provide communication regarding the request (e.g., a denial letter). In some embodiments, the system creates one or more document templates corresponding to the one or more document types. In some embodiments, the system creates a plurality of document templates corresponding to a plurality of document types.

According to certain embodiments, at process 220, the system determines one or more evidence types based on the request. In some embodiments, the system determines one or more evidence types based on the one or more requirements associated with the request. For example, the requirement includes a hospital stay duration. As an example, the denial reason includes an indication of the hospital stay duration being missing. In certain embodiments, the determined evidence type is the hospital stay duration.

According to some embodiments, at process 225, the system extracts one or more pieces of evidence from one or more data records. In some embodiments, the system extracts and/or determines the one or more pieces of evidence based on the one or more evidence type. For example, the system extracts the data for the hospital stay duration from a patient record. In certain embodiments, the one or more data records are stored in one or more data repositories. In some embodiments, the one or more data records are stored in a plurality of data repositories (e.g., a plurality of servers, etc.). In certain embodiments, the one or more data records are stored in a plurality of data systems (e.g., a plurality of healthcare systems). In some embodiments, the system extracts the one or more pieces of evidence from the one or more data records using a computing model (e.g., a natural language understanding model, a language model, a large language model, etc.). In certain embodiments, the system generates a prompt based on the one or more requirements and inputs the prompt into the computing model.

According to certain embodiments, at process 230, the system accesses one or more routes for document generation, each route of the one or more routes using one or more template-specific computing models. In some embodiments, a template-specific computing model uses a template-specific prompts for a document template. In certain embodiments, a template-specific computing models uses a series of prompts for a document template. In some embodiments, the system uses two or more routes. Figure 4 is an illustrative workflow 400 having multiple routes for a document generation system according to certain embodiments of the present disclosure. Figure 4 is merely an example. One of ordinary skill in the art would recognize many variations, alternatives, and modifications. In this example, the workflow 400 includes a first route 420 corresponding to a first document type of the first document 428 and a second route 430 corresponding to a second document type of the second document 436.

In some examples, the first route 420 includes one or more template-specific computing models 422 and 426. In certain examples, the first route 420 includes a series of template-specific prompts 421 and 424. In some examples, one prompt in the series of template-specific prompts is corresponding to a document section. In certain embodiments, the first document 428 and the second document 436 are different in document type. In some embodiments, the one or more pieces of evidence 414 are extracted from one or more data records. In certain embodiments, the one or more pieces of evidence 414 are extracted from one or more data records and based on one or more evidence types corresponding to one or more requirements 410. In some embodiments, the system extracts the pieces of evidence 414 using a computing model 412 (e.g., a language model, a large language model, etc.). In certain embodiments, the first route 420 uses a first subset of the one or more pieces of evidence 414. In some embodiments, the second route 430 uses a second subset of the one or more pieces of evidence 414, which is different from the first subset.

In certain embodiments, the first subset and/or the second subset is the entire set of the pieces of evidence 414. In some embodiments, the first subset and/or the second subset does not include every piece of evidence in the full set of evidence 414. In certain embodiments, the first subset is different from the second subset. In some embodiments, the first subset includes a piece of evidence that is not in the second subset of evidence. In certain embodiments, the second subset includes a piece of evidence that is not in the first subset.

In certain embodiments, the first route 420 includes one or more first prompt templates associated with one or more first computing models (e.g., the second computing model 422, the third computing model 426). In some embodiments, the second route 430 includes the function 431 and the fourth computing model 434.

According to some embodiments, referring back to Figure 2, at process 235, the system generates one or more prompts for the one or more routes based on the one or more pieces of evidence. In certain embodiments, the system generates one or more first prompts for a first route of the one or more routes using a first subset of the one or more pieces of evidence. In some embodiments, the system generates one or more first prompts for the first route based on one or more first prompt templates. In certain embodiments, the system fills one or more variables in at least one of the one or more first prompt templates based on the first subset of the one or more pieces of evidence; generating one or more first prompts based on the one or more first prompt templates and the first subset of the one or more pieces of evidence. In some embodiments, the system inputs the one or more first prompts to the one or more first computing models.

In certain embodiments, the system generates one or more second prompts for a second route of the one or more routes using a second subset of the one or more pieces of evidence. In some embodiments, the system generates one or more second prompts for the second route based on one or more second prompt templates. In certain embodiments, the one or more second prompts are different from the one or more first prompts. In certain embodiments, the system fills one or more variables in at least one of the one or more second prompt templates based on the second subset of the one or more pieces of evidence; generating one or more second prompts based on the one or more second prompt templates and the second subset of the one or more pieces of evidence. In some embodiments, the system inputs the one or more second prompts to the one or more second computing models.

In certain embodiments, a route includes one or more functions. In some embodiments, the system inputs a subset of the one or more pieces of evidence to the one or more functions. For example, a function can generate a document section using the subset of the one or more pieces of evidence.

According to certain embodiments, at process 240, the system generates one or more documents using the one or more routes. As illustrated in Figure 4, the system uses the first route 420 to generate the first document 428 and the system uses the second route 430 to generate the second document 436. In some embodiments, the first document 428 and the second document 436 have one or more same document sections. In some embodiments, the system generates one or more first sections of a first generated document of the one or more generated documents using at least one of the one or more routes. In certain embodiments, the system generates a second section of the first generated document based at least in part on the one or more first sections. For example, as illustrated in Figure 5A, the system generates the document section 540A based on one or more of the document sections 510A, 520A, and 530A. For example, the system generates a conclusion section based on the previous sections.

According to some embodiments, at process 245, the system outputs a selected document that is selected from the one or more generated documents. In some embodiments, the selected document is selected by an input. In some embodiments, the selected document is selected by a user input. In certain embodiments, the selected document is selected by one or more criteria. In some embodiments, the system sends the selected document (e.g., the selected appeal letter, the selected legal brief, etc.) to an external system (e.g., an insurance system), for example, after review, editing, and approval by a human (e.g., an employee of a hospital).

According to certain embodiments, at process 250, the system receives one or more results regarding the selected document. In some embodiments, at process 255, the system extracts one or more feedback based on the one or more results. For example, the result is that the appeal letter is accepted. As an example, the result is that the appeal letter is denied.

According to some embodiments, at process 260, the system updates at least one of the one or more routes based on the one or more feedback. As illustrated in Figure 4, in certain embodiments, the workflow 400 includes using one or more feedback 440 to update the first route 420 and/or the second route 430. In some embodiments, the workflow 400 includes using at least one of the one or more feedback to update one or more prompts (e.g., the first prompt 421, the second prompt 424, the third prompt 432, etc.). In certain embodiments, the workflow 400 includes using at least one of the one or more feedback to update one or more functions (e.g., the function 431). In some embodiments, the workflow 400 includes using at least one of the one or more feedback to update one or more computing models (e.g., the computing models 412, 422, 426, and/or 434).

In certain embodiments, the generated document is an appeal letter. In some embodiments, for each document template of the created one or more document templates, if the appeal letter is successful, extract positive feedback from the successful appeal letter (and other successful appeal letters). In some embodiments, for each document template of the created one or more document templates, use the extracted positive feedback from the successful appeal letter (and other successful appeal letters) to improve the sequence of input prompts to LLM. In certain embodiments, for each document template of the created one or more document templates, if the appeal letter is denied, extract negative feedback from the denied appeal letter (and other denied appeal letters). In some embodiments, for each document template of the created one or more document templates, use the extracted negative feedback from the denied appeal letter (and other denied appeal letters) to improve the sequence of input prompts to LLM.

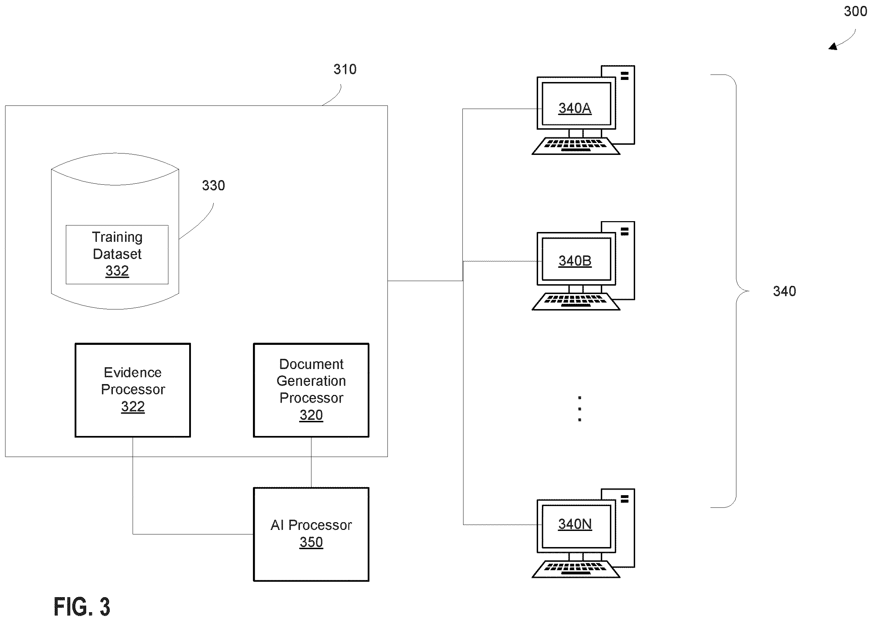

Figure 3 is an illustrative document generation environment 300 according to certain embodiments of the present disclosure. Figure 3 is merely an example. One of ordinary skill in the art would recognize many variations, alternatives, and modifications. In some embodiments, the document generation environment 300 includes one or more document generation system 310 and one or more computing devices 340 (e.g., computing device 340A, computing device 340B, ... computing device 340N, etc.). In certain embodiments, the document generation system 310 includes one or more document generation processor 320s, one or more evidence processors 322, one or more displays 327, and one or more data repositories 330.

In some embodiments, the one or more data repositories 330 include one or more training datasets 332, for example, for one or more document generation AI models. In certain embodiments, the computing device 340 may include and/or access at least a part of the functionality of the document generation system 310. In some embodiments, the computing device 340 is an external system (e.g., a healthcare system, an insurance system, etc.). In certain embodiments, the document generation processors 320 and/or the evidence processors 322 interacts with one or more AI processors 350 (e.g., AI servers). For example, the document generation processor 320 provides one or more prompts to the one or more AI processors 350 to generate outputs (e.g., documents, document sections, evidence, etc.). Although the above has been shown using a selected group of components in the document generation environment 300, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the document generation system 310 (e.g., the document generation processor 320, the evidence processor 322, etc.) receives a request associated with one or more requirements. In some examples, the request is a denial letter of an insurance claim. In certain examples, the request is to generate a legal brief. In some embodiments, the document generation system 310 (e.g., the document generation processor 320, the evidence processor 322, etc.) identifies one or more requirements based at least in part on the request. In certain embodiments, the document generation system 310 (e.g., the document generation processor 320, the evidence processor 322, etc.) identifies one or more denial reasons based at least in part on the denial letter. In some embodiments, the document generation system 310 (e.g., the document generation processor 320, the evidence processor 322, etc.) is configured to identify the one or more requirements based on the request and one or more data records associated with the request. In certain embodiments, the one or more data records are stored in one or more data repositories. In some embodiments, the one or more data records are stored in a plurality of data repositories (e.g., a plurality of servers, etc.). In certain embodiments, the one or more data records are stored in a plurality of data systems (e.g., a plurality of healthcare systems). In some embodiments, the document generation system 310 (e.g., the document generation processor 320, the evidence processor 322, etc.) is configured to identify the one or more denial reasons based on the denial letter and one or more patient records.

According to some embodiments, the document generation system 310 (e.g., the document generation processor 320, the evidence processor 322, etc.) determines one or more document types based on the one or more requirements. In certain embodiments, a document type is determined based on at least one of the one or more requirements. In some embodiments, the document generation system 310 (e.g., the document generation processor 320, the evidence processor 322, etc.) determines two or more different document types based on the one or more requirements. In certain embodiments, a document type corresponds to a document template. For example, a document type is an appeal letter to an insurance denial. As an example, the document type corresponds to a document template that includes one or more document sections (e.g., paragraphs) to provide communication regarding the request (e.g., a denial letter). In some embodiments, the document generation system 310 (e.g., the document generation processor 320, the evidence processor 322, etc.) creates one or more document templates corresponding to the one or more document types. In some embodiments, the document generation system 310 (e.g., the document generation processor 320, the evidence processor 322, etc.) creates a plurality of document templates corresponding to a plurality of document types.

According to certain embodiments, the document generation system 310 (e.g., the document generation processor 320, the evidence processor 322, etc.) determines one or more evidence types based on the request. In some embodiments, the document generation system 310 (e.g., the document generation processor 320, the evidence processor 322, etc.) determines one or more evidence types based on the one or more requirements associated with the request. For example, the requirement includes a hospital stay duration. As an example, the denial reason includes an indication of the hospital stay duration being missing. In certain embodiments, the determined evidence type is the hospital stay duration.

According to some embodiments, the document generation system 310 (e.g., the document generation processor 320, the evidence processor 322, etc.) extracts one or more pieces of evidence from one or more data records. In some embodiments, the document generation system 310 (e.g., the document generation processor 320, the evidence processor 322, etc.) extracts and/or determines the one or more pieces of evidence based on the one or more evidence type. For example, the document generation system 310 (e.g., the document generation processor 320, the evidence processor 322, etc.) extract the data for the hospital stay duration from a patient record. In certain embodiments, the one or more data records are stored in one or more data repositories. In some embodiments, the one or more data records are stored in a plurality of data repositories (e.g., a plurality of servers, etc.). In certain embodiments, the one or more data records are stored in a plurality of data systems (e.g., a plurality of healthcare systems). In some embodiments, the document generation system 310 (e.g., the document generation processor 320, the evidence processor 322, etc.) extracts the one or more pieces of evidence from the one or more data records using a computing model (e.g., a natural language understanding model, a language model, a large language model, etc.). In certain embodiments, the document generation system 310 (e.g., the document generation processor 320, the evidence processor 322, etc.) generates a prompt based on the one or more requirements and inputs the prompt into the computing model.

According to certain embodiments, the document generation system 310 (e.g., the document generation processor 320, the evidence processor 322, etc.) accesses one or more routes for document generation, each route of the one or more routes using one or more template-specific computing models. In some embodiments, a template-specific computing model uses a template-specific prompts for a document template. In certain embodiments, a template-specific computing models uses a series of prompts for a document template. In some embodiments, the document generation system 310 (e.g., the document generation processor 320, the evidence processor 322, etc.) uses two or more routes. Figure 4 is an illustrative workflow 400 having multiple routes for a document generation system according to certain embodiments of the present disclosure. Figure 4 is merely an example. One of ordinary skill in the art would recognize many variations, alternatives, and modifications. In this example, the workflow 400 includes a first route 420 corresponding to a first document type of the first document 428 and a second route 430 corresponding to a second document type of the second document 436.

In some examples, the first route 420 includes one or more template-specific computing models 422 and 426. In certain examples, the first route 420 includes a series of template-specific prompts 421 and 424. In some examples, one prompt in the series of template-specific prompts is corresponding to a document section. In certain embodiments, the first document 428 and the second document 436 are different in document type. In some embodiments, the one or more pieces of evidence 414 are extracted from one or more data records. In certain embodiments, the one or more pieces of evidence 414 are extracted from one or more data records and based on one or more evidence types corresponding to one or more requirements 410. In some embodiments, the document generation system 310 (e.g., the document generation processor 320, the evidence processor 322, etc.) extracts the pieces of evidence 414 using a computing model 412 (e.g., a language model, a large language model, etc.). In certain embodiments, the first route 420 uses a first subset of the one or more pieces of evidence 414. In some embodiments, the second route 430 uses a second subset of the one or more pieces of evidence 414, which is different from the first subset.

In certain embodiments, the first subset and/or the second subset is the entire set of the pieces of evidence 414. In some embodiments, the first subset and/or the second subset does not include every piece of evidence in the full set of evidence 414. In certain embodiments, the first subset is different from the second subset. In some embodiments, the first subset includes a piece of evidence that is not in the second subset of evidence. In certain embodiments, the second subset includes a piece of evidence that is not in the first subset.

In certain embodiments, the first route 420 includes one or more first prompt templates associated with one or more first computing models (e.g., the second computing model 422, the third computing model 426). In some embodiments, the second route 430 includes the function 431 and the fourth computing model 434.

According to some embodiments, referring back to Figure 2, the document generation system 310 (e.g., the document generation processor 320, the evidence processor 322, etc.) generates one or more prompts for the one or more routes based on the one or more pieces of evidence. In certain embodiments, the document generation system 310 (e.g., the document generation processor 320, the evidence processor 322, etc.) generates one or more first prompts for a first route of the one or more routes using a first subset of the one or more pieces of evidence. In some embodiments, the document generation system 310 (e.g., the document generation processor 320, the evidence processor 322, etc.) generates one or more first prompts for the first route based on one or more first prompt templates. In certain embodiments, the document generation system 310 (e.g., the document generation processor 320, the evidence processor 322, etc.) fills one or more variables in at least one of the one or more first prompt templates based on the first subset of the one or more pieces of evidence; generating one or more first prompts based on the one or more first prompt templates and the first subset of the one or more pieces of evidence. In some embodiments, the document generation system 310 (e.g., the document generation processor 320, the evidence processor 322, etc.) inputs the one or more first prompts to the one or more first computing models.

In certain embodiments, the document generation system 310 (e.g., the document generation processor 320, the evidence processor 322, etc.) generates one or more second prompts for a second route of the one or more routes using a second subset of the one or more pieces of evidence. In some embodiments, the document generation system 310 (e.g., the document generation processor 320, the evidence processor 322, etc.) generates one or more second prompts for the second route based on one or more second prompt templates. In certain embodiments, the one or more second prompts are different from the one or more first prompts. In certain embodiments, the document generation system 310 (e.g., the document generation processor 320, the evidence processor 322, etc.) fills one or more variables in at least one of the one or more second prompt templates based on the second subset of the one or more pieces of evidence; generating one or more second prompts based on the one or more second prompt templates and the second subset of the one or more pieces of evidence. In some embodiments, the document generation system 310 (e.g., the document generation processor 320, the evidence processor 322, etc.) inputs the one or more second prompts to the one or more second computing models.

In certain embodiments, a route includes one or more functions. In some embodiments, the document generation system 310 (e.g., the document generation processor 320, the evidence processor 322, etc.) inputs a subset of the one or more pieces of evidence to the one or more functions. For example, a function can generate a document section using the subset of the one or more pieces of evidence.

According to certain embodiments, the document generation system 310 (e.g., the document generation processor 320, the evidence processor 322, etc.) generates one or more documents using the one or more routes. As illustrated in Figure 4, the document generation system 310 (e.g., the document generation processor 320, the evidence processor 322, etc.) uses the first route 420 to generate the first document 428 and the document generation system 310 (e.g., the document generation processor 320, the evidence processor 322, etc.) uses the second route 430 to generate the second document 436. In some embodiments, the first document 428 and the second document 436 have one or more same document sections. In some embodiments, the document generation system 310 (e.g., the document generation processor 320, the evidence processor 322, etc.) generates one or more first sections of a first generated document of the one or more generated documents using at least one of the one or more routes. In certain embodiments, the document generation system 310 (e.g., the document generation processor 320, the evidence processor 322, etc.) generates a second section of the first generated document based at least in part on the one or more first sections. For example, as illustrated in Figure 5A, the document generation system 310 (e.g., the document generation processor 320, the evidence processor 322, etc.) generates the document section 540A based on one or more of the document sections 510A, 520A, and 530A. For example, the document generation system 310 (e.g., the document generation processor 320, the evidence processor 322, etc.) generates a conclusion section based on the previous sections.

According to some embodiments, the document generation system 310 (e.g., the document generation processor 320, the evidence processor 322, etc.) outputs a selected document that is selected from the one or more generated documents. In some embodiments, the selected document is selected by an input. In some embodiments, the selected document is selected by a user input. In certain embodiments, the selected document is selected by one or more criteria. In some embodiments, the document generation system 310 (e.g., the document generation processor 320, the evidence processor 322, etc.) sends the selected document (e.g., the selected appeal letter, the selected legal brief, etc.) to an external system (e.g., an insurance system), for example, after review, editing, and/or approval by a human.

According to certain embodiments, at process 250, the document generation system 310 (e.g., the document generation processor 320, the evidence processor 322, etc.) receives one or more results regarding the selected document. In some embodiments, the document generation system 310 (e.g., the document generation processor 320, the evidence processor 322, etc.) extracts one or more feedback based on the one or more results. For example, the result is that the appeal letter is accepted. As an example, the result is that the appeal letter is denied.

According to some embodiments, the document generation system 310 (e.g., the document generation processor 320, the evidence processor 322, etc.) updates at least one of the one or more routes based on the one or more feedback. As illustrated in Figure 4, in certain embodiments, the workflow 400 includes using one or more feedback 440 to update the first route 420 and/or the second route 430. In some embodiments, the workflow 400 includes using at least one of the one or more feedback to update one or more prompts (e.g., the first prompt 421, the second prompt 424, the third prompt 432, etc.). In certain embodiments, the workflow 400 includes using at least one of the one or more feedback to update one or more functions (e.g., the function 431). In some embodiments, the workflow 400 includes using at least one of the one or more feedback to update one or more computing models (e.g., the computing models 412, 422, 426, and/or 434).

In certain embodiments, the generated document is an appeal letter. In some embodiments, for each document template of the created one or more document templates, if the appeal letter is successful, extract positive feedback from the successful appeal letter (and other successful appeal letters). In some embodiments, for each document template of the created one or more document templates, use the extracted positive feedback from the successful appeal letter (and other successful appeal letters) to improve the sequence of input prompts to LLM. In certain embodiments, for each document template of the created one or more document templates, if the appeal letter is denied, extract negative feedback from the denied appeal letter (and other denied appeal letters). In some embodiments, for each document template of the created one or more document templates, use the extracted negative feedback from the denied appeal letter (and other denied appeal letters) to improve the sequence of input prompts to LLM.

In some embodiments, the one or more repositories 330 can include one or more training datasets 332, one or more document generation AI models, one or more parameters and weight values for the one or more document generation AI models, inputs, requests (e.g., denials), document templates, requirements, document types, evidence, evidence types, prompt templates (e.g., prompt structures), prompts, functions, document results, feedbacks, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the document generation environment 300 can execute software or firmware stored in non-transitory computer-readable medium to implement various processing steps. Various components and processors of the document generation environment 300 can be implemented by one or more computing devices including, but not limited to, circuits, a computer, a cloud-based processing unit, a processor, a processing unit, a microprocessor, a mobile computing device, and/or a tablet computer. In some cases, various components referenced by the document generation environment 300 (e.g., the one or more document generation systems 310, the one or more document generation processors 320, the one or more evidence processors 322, the one or more computing devices 340, the one or more AI processors 350, etc.) can be implemented on a shared computing device. Alternatively, a component of the document generation environment 300 can be implemented on multiple computing devices. In some implementations, various modules and components referenced by the document generation environment 300 can be implemented as software, hardware, firmware, or a combination thereof. In some cases, various components referenced by the document generation environment 300 can be implemented in software or firmware executed by a computing device.

Various components referenced by document generation environment 300 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as an intranet, or on a public computer network, such as the Internet.

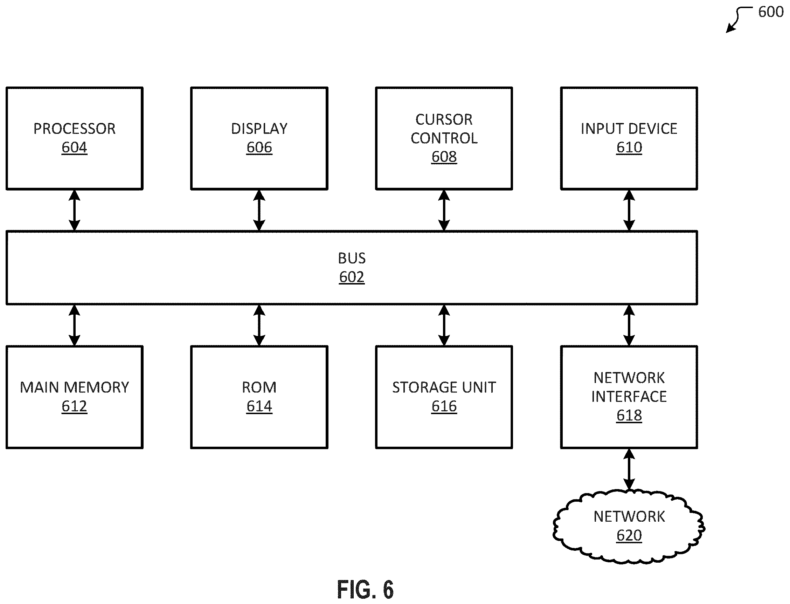

Figure 6 is a simplified diagram showing a computing system for implementing a system 600 for document generation in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods (e.g., the method 200, etc.) and processes described in the present disclosure are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for document generation, the method comprising: identifying one or more document types associated with a request, each document type being associated with a document template; extracting one or more pieces of evidence from one or more data records based on the request; accessing one or more routes for document generations, each route of the one or more routes using one or more template-specific computing models; generating one or more documents using the one or more routes; and outputting a selected document that is selected from the one or more generated documents; wherein the method is performed by one or more processors. For example, the method is implemented according to at least Figure 1, Figure 2, Figure 3, and/or Figure 4.

In some embodiments, the request is associated with one or more requirements. In certain embodiments, the extracting one or more pieces of evidence from one or more data records includes at least: determining one or more evidence types based on the one or more requirements; and extracting the one or more pieces of evidence based on the one or more determined evidence types. In some embodiments, the one or more generated documents include a first generated document and a second generated document different from the first generated document in a document type. In certain embodiments, the first generated document is generated using a first route of the one or more routes; wherein the first route uses a first subset of the one or more pieces of evidence; wherein the second generated document is generated using a second route of the one or more routes; wherein the second route uses a second subset of the one or more pieces of evidence; wherein the first subset of the one or more pieces of evidence is different from the second subset of the one or more pieces of evidence.

In some embodiments, a first route of the one or more routes includes one or more first prompt templates associated with one or more first computing models. In certain embodiments, the method further comprises: filling one or more variables in at least one of the one or more first prompt templates based on a first subset of the one or more pieces of evidence; generating one or more first prompts based on the one or more first prompt templates and the first subset of the one or more pieces of evidence; inputting the one or more first prompts to the one or more first computing models; and generating a first generated document of the one or more generated documents using the one or more first computing models. In some embodiments, a second route of the one or more routes includes one or more second prompt templates associated with one or more second computing models. In certain embodiments, the first route corresponds to a first document type, wherein the second route corresponds to a second document type different from the first document type. In some embodiments, the method further comprises: filling one or more variables in at least one of the one or more second prompt templates based on a second subset of the one or more pieces of evidence, the second subset of the one or more pieces of evidence being different from the first subset of the one or more pieces of evidence; generating one or more second prompts based on the one or more second prompt templates and the second subset of the one or more pieces of evidence; and inputting the one or more second prompts to the one or more second computing models; and generating a second generated document of the one or more generated documents using the one or more second computing models.

In some embodiments, the first generated document and the second generated document include at least one common section. In certain embodiments, the method further comprises: creating a first document template for the first document type; and creating a second document template for the second document type. In some embodiments, a route of the one or more routes includes a function and a computing model. In certain embodiments, the computing model includes a large language model. In some embodiments, the generating one or more documents using the one or more routes includes: generating one or more first sections of a first generated document of the one or more generated documents using at least one of the one or more routes; and generating a second section of the first generated document based at least in part on the one or more first sections. In certain embodiments, the method further comprises: receiving one or more results associated with the selected document; and extracting a feedback from the one or more results. In some embodiments, the method further comprises: updating at least one of the one or more routes based on the extracted feedback.

According to some embodiments, a system for document generation, the system comprising: one or more memories comprising instructions stored thereon; and one or more processors configured to execute the instructions and perform operations comprising: identifying one or more document types associated with a request, each document type being associated with a document template; extracting one or more pieces of evidence from one or more data records based on the request; accessing one or more routes for document generations, each route of the one or more routes using one or more template-specific computing models; generating one or more documents using the one or more routes; and outputting a selected document that is selected from the one or more generated documents. For example, the system is implemented according to at least Figure 1, Figure 2, Figure 3, and/or Figure 4.

In some embodiments, the request is associated with one or more requirements. In certain embodiments, the extracting one or more pieces of evidence from one or more data records includes at least: determining one or more evidence types based on the one or more requirements; and extracting the one or more pieces of evidence based on the one or more determined evidence types. In some embodiments, the one or more generated documents include a first generated document and a second generated document different from the first generated document in a document type. In certain embodiments, the first generated document is generated using a first route of the one or more routes; wherein the first route uses a first subset of the one or more pieces of evidence; wherein the second generated document is generated using a second route of the one or more routes; wherein the second route uses a second subset of the one or more pieces of evidence; wherein the first subset of the one or more pieces of evidence is different from the second subset of the one or more pieces of evidence.

In some embodiments, a first route of the one or more routes includes one or more first prompt templates associated with one or more first computing models. In certain embodiments, the operations further comprise: filling one or more variables in at least one of the one or more first prompt templates based on a first subset of the one or more pieces of evidence; generating one or more first prompts based on the one or more first prompt templates and the first subset of the one or more pieces of evidence; inputting the one or more first prompts to the one or more first computing models; and generating a first generated document of the one or more generated documents using the one or more first computing models. In some embodiments, a second route of the one or more routes includes one or more second prompt templates associated with one or more second computing models. In certain embodiments, the first route corresponds to a first document type, wherein the second route corresponds to a second document type different from the first document type. In some embodiments, the operations further comprise: filling one or more variables in at least one of the one or more second prompt templates based on a second subset of the one or more pieces of evidence, the second subset of the one or more pieces of evidence being different from the first subset of the one or more pieces of evidence; generating one or more second prompts based on the one or more second prompt templates and the second subset of the one or more pieces of evidence; and inputting the one or more second prompts to the one or more second computing models; and generating a second generated document of the one or more generated documents using the one or more second computing models.

In some embodiments, the first generated document and the second generated document include at least one common section. In certain embodiments, the operations further comprise: creating a first document template for the first document type; and creating a second document template for the second document type. In some embodiments, a route of the one or more routes includes a function and a computing model. In certain embodiments, the computing model includes a large language model. In some embodiments, the generating one or more documents using the one or more routes includes: generating one or more first sections of a first generated document of the one or more generated documents using at least one of the one or more routes; and generating a second section of the first generated document based at least in part on the one or more first sections. In certain embodiments, the operations further comprise: receiving one or more results associated with the selected document; and extracting a feedback from the one or more results. In some embodiments, the operations further comprise: updating at least one of the one or more routes based on the extracted feedback.

According to certain embodiments, a non-transitory computer-readable storage medium having instructions for document generation that, when executed by one or more processors, cause the one or more processors to perform operations comprising: identifying one or more document types associated with a request, each document type being associated with a document template; extracting one or more pieces of evidence from one or more data records based on the request; accessing one or more routes for document generations, each route of the one or more routes using one or more template-specific computing models; generating one or more documents using the one or more routes; and outputting a selected document that is selected from the one or more generated documents. For example, the non-transitory computer-readable storage medium is implemented according to at least Figure 1, Figure 2, Figure 3, and/or Figure 4.

In some embodiments, the request is associated with one or more requirements. In certain embodiments, the extracting one or more pieces of evidence from one or more data records includes at least: determining one or more evidence types based on the one or more requirements; and extracting the one or more pieces of evidence based on the one or more determined evidence types. In some embodiments, the one or more generated documents include a first generated document and a second generated document different from the first generated document in a document type. In certain embodiments, the first generated document is generated using a first route of the one or more routes; wherein the first route uses a first subset of the one or more pieces of evidence; wherein the second generated document is generated using a second route of the one or more routes; wherein the second route uses a second subset of the one or more pieces of evidence; wherein the first subset of the one or more pieces of evidence is different from the second subset of the one or more pieces of evidence.

In some embodiments, a first route of the one or more routes includes one or more first prompt templates associated with one or more first computing models. In certain embodiments, the operations further comprise: filling one or more variables in at least one of the one or more first prompt templates based on a first subset of the one or more pieces of evidence; generating one or more first prompts based on the one or more first prompt templates and the first subset of the one or more pieces of evidence; inputting the one or more first prompts to the one or more first computing models; and generating a first generated document of the one or more generated documents using the one or more first computing models. In some embodiments, a second route of the one or more routes includes one or more second prompt templates associated with one or more second computing models. In certain embodiments, the first route corresponds to a first document type, wherein the second route corresponds to a second document type different from the first document type. In some embodiments, the operations further comprise: filling one or more variables in at least one of the one or more second prompt templates based on a second subset of the one or more pieces of evidence, the second subset of the one or more pieces of evidence being different from the first subset of the one or more pieces of evidence; generating one or more second prompts based on the one or more second prompt templates and the second subset of the one or more pieces of evidence; and inputting the one or more second prompts to the one or more second computing models; and generating a second generated document of the one or more generated documents using the one or more second computing models.

In some embodiments, the first generated document and the second generated document include at least one common section. In certain embodiments, the operations further comprise: creating a first document template for the first document type; and creating a second document template for the second document type. In some embodiments, a route of the one or more routes includes a function and a computing model. In certain embodiments, the computing model includes a large language model. In some embodiments, the generating one or more documents using the one or more routes includes: generating one or more first sections of a first generated document of the one or more generated documents using at least one of the one or more routes; and generating a second section of the first generated document based at least in part on the one or more first sections. In certain embodiments, the operations further comprise: receiving one or more results associated with the selected document; and extracting a feedback from the one or more results. In some embodiments, the operations further comprise: updating at least one of the one or more routes based on the extracted feedback.

According to some embodiments, a method for generating an appeal letter, the method comprising: receiving a denial letter; determining one or more document types to be generated based on information in the denial letter; generating one or more document templates based on the one or more determined document types; determining one or more types of evidence based on the information in the denial letter; extracting one or more pieces of evidence from one or more data records using a first computing model, each piece of evidence corresponding to one of the one or more types of evidence; and generating one or more documents based on the one or more pieces of evidence and the one or more document templates using one or more second computing models; generating the appeal letter based on the one or more generated documents; wherein the method is performed by one or more processors. For example, the method is implemented according to at least Figure 1, Figure 2, Figure 3, and/or Figure 4.

In some embodiments, the method further comprises: extracting one or more denial reasons from the denial letter; wherein the determining one or more types of evidence includes determining one or more types of evidence based at least in part on the one or more denial reasons. In some embodiments, the request is associated with one or more requirements. In certain embodiments, the extracting one or more pieces of evidence from one or more data records includes at least: determining one or more evidence types based on the one or more requirements; and extracting the one or more pieces of evidence based on the one or more determined evidence types. In some embodiments, the one or more generated documents include a first generated document and a second generated document different from the first generated document in a document type. In certain embodiments, the first generated document is generated using a first route of the one or more routes; wherein the first route uses a first subset of the one or more pieces of evidence; wherein the second generated document is generated using a second route of the one or more routes; wherein the second route uses a second subset of the one or more pieces of evidence; wherein the first subset of the one or more pieces of evidence is different from the second subset of the one or more pieces of evidence.

In some embodiments, a first route of the one or more routes includes one or more first prompt templates associated with one or more first computing models. In certain embodiments, the method further comprises: filling one or more variables in at least one of the one or more first prompt templates based on a first subset of the one or more pieces of evidence; generating one or more first prompts based on the one or more first prompt templates and the first subset of the one or more pieces of evidence; inputting the one or more first prompts to the one or more first computing models; and generating a first generated document of the one or more generated documents using the one or more first computing models. In some embodiments, a second route of the one or more routes includes one or more second prompt templates associated with one or more second computing models. In certain embodiments, the first route corresponds to a first document type, wherein the second route corresponds to a second document type different from the first document type. In some embodiments, the method further comprises: filling one or more variables in at least one of the one or more second prompt templates based on a second subset of the one or more pieces of evidence, the second subset of the one or more pieces of evidence being different from the first subset of the one or more pieces of evidence; generating one or more second prompts based on the one or more second prompt templates and the second subset of the one or more pieces of evidence; and inputting the one or more second prompts to the one or more second computing models; and generating a second generated document of the one or more generated documents using the one or more second computing models.

In some embodiments, the first generated document and the second generated document include at least one common section. In certain embodiments, the method further comprises: creating a first document template for the first document type; and creating a second document template for the second document type. In some embodiments, a route of the one or more routes includes a function and a computing model. In certain embodiments, the computing model includes a large language model. In some embodiments, the generating one or more documents using the one or more routes includes: generating one or more first sections of a first generated document of the one or more generated documents using at least one of the one or more routes; and generating a second section of the first generated document based at least in part on the one or more first sections. In certain embodiments, the method further comprises: receiving one or more results associated with the selected document; and extracting a feedback from the one or more results. In some embodiments, the method further comprises: updating at least one of the one or more routes based on the extracted feedback.

For example, some or all components referenced by various embodiments of the present disclosure each are, individually and/or in combination with at least another component, implemented using one or more software components, one or more hardware components, and/or one or more combinations of software and hardware components. In another example, some or all components referenced by various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components referenced by the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for document generation, the method comprising:
identifying (215) one or more document types associated with a request, each document type being associated with a document template;
extracting (225) one or more pieces of evidence from one or more data records based on the request;
accessing (230) one or more routes for document generations, each route of the one or more routes using one or more template-specific computing models;
generating (240) one or more documents using the one or more routes; and
outputting (245) a selected document that is selected from the one or more generated documents;
wherein the method is performed by one or more processors.

2. The method of claim 1, wherein the request is associated with one or more requirements.

3. The method of claim 1 or claim 2, wherein the extracting one or more pieces of evidence from one or more data records includes at least:
determining one or more evidence types based on the one or more requirements; and
extracting the one or more pieces of evidence based on the one or more determined evidence types.

4. The method of any preceding claim, wherein the one or more generated documents include a first generated document and a second generated document, wherein the second generated document is different from the first generated document in a document type.

5. The method of claim 4, wherein the first generated document is generated using a first route of the one or more routes;
wherein the first route uses a first subset of the one or more pieces of evidence;
wherein the second generated document is generated using a second route of the one or more routes;
wherein the second route uses a second subset of the one or more pieces of evidence;
wherein the first subset of the one or more pieces of evidence is different from the second subset of the one or more pieces of evidence.

6. The method of any preceding claim, wherein first route of the one or more routes includes one or more first prompt templates associated with one or more first computing models.

7. The method of claim 6, further comprising:
filling one or more variables in at least one of the one or more first prompt templates based on a first subset of the one or more pieces of evidence;
generating one or more first prompts based on the one or more first prompt templates and the first subset of the one or more pieces of evidence;
inputting the one or more first prompts to the one or more first computing models; and
generating a first generated document of the one or more generated documents using the one or more first computing models.

8. The method of claim 7, wherein a second route of the one or more routes includes one or more second prompt templates associated with one or more second computing models.

9. The method of claim 8, wherein the first route corresponds to a first document type, wherein the second route corresponds to a second document type different from the first document type.

10. The method of claim 8 or claim 9, further comprising:
filling one or more variables in at least one of the one or more second prompt templates based on a second subset of the one or more pieces of evidence, the second subset of the one or more pieces of evidence being different from the first subset of the one or more pieces of evidence;
generating one or more second prompts based on the one or more second prompt templates and the second subset of the one or more pieces of evidence; and
inputting the one or more second prompts to the one or more second computing models; and
generating a second generated document of the one or more generated documents using the one or more second computing models,
optionally wherein the first generated document and the second generated document include at least one common section.

11. The method of claim 9 or any claim dependent thereon, further comprising:
creating a first document template for the first document type; and
creating a second document template for the second document type.

12. The method of any preceding claim, wherein one route of the one or more routes includes a function and a computing model,
optionally wherein the computing model includes a large language model.

13. The method of any preceding claim, wherein the generating one or more documents using the one or more routes includes:
generating one or more first sections of a first generated document of the one or more generated documents using at least one of the one or more routes; and
generating a second section of the first generated document based at least in part on the one or more first sections.

14. The method of any preceding claim, further comprising:
receiving one or more results associated with the selected document; and
extracting a feedback from the one or more results,
optionally further comprising:
updating at least one of the one or more routes based on the extracted feedback.

15. A system (310, 600) for document generation, the system comprising:
one or more memories (616) comprising instructions stored thereon; and
one or more processors (604) configured to execute the instructions and perform operations in accordance with the method of any preceding claim.
